# EUROPEAN PATENT SPECIFICATION

(11) **EP 3 560 244 B1**
(45) Date of publication and mention of the grant of the patent: **02.06.2021**
(21) Application number: 18739130.5
(22) Date of filing: 04.01.2018
(51) Int. Cl.: H04W 48/12

(54) **SYSTEM INFORMATION MANAGEMENT IN A HYPERCELL**
VERWALTUNG VON SYSTEMINFORMATIONEN IN EINER HYPERZELLE
GESTION D'INFORMATIONS SYSTÈME DANS UNE HYPERCELLULE

(30) Priority: 13.01.2017 US 201715405488
(43) Date of publication of application: 30.10.2019
(73) Proprietor: Huawei Technologies Co., Ltd., Longgang District Shenzhen, Guangdong 518129 (CN)
(72) Inventor: TENNY, Nathan, Edward, Poway California 92064 (US); GENG, Tingting, Shanghai 201236 (CN); BI, Hao, Lake Zurich Illinois 60047 (US)
(74) Representative: Pfenning, Meinig & Partner mbB
(86) International application number: PCT/CN2018/071390
(87) International publication number: WO 2018/130114

(56) References cited:
- WO-A1-2014/014317
- CN-A- 103 716 856
- CN-A- 105 993 192
- CATT: "NR PBCH and NR physical channel carried system information", 3GPP DRAFT; R1-1700182, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 10 January 2017 (2017-01-10), XP051202687, Retrieved from the Internet: URL:http://www.3gpp.org/ftp/tsg_ran/WG1_RL 1/TSGR1_AH/NR_AH_1701/Docs/ [retrieved on 2017-01-10]
- CATT: "Control plane for support of NR standalone operation", 3GPP DRAFT; R2-163468 CP FOR STANDALONE NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160523 - 20160527 22 May 2016 (2016-05-22), XP051104967, Retrieved from the Internet: URL:http://www.3gpp.org/ftp/Meetings_3GPP_ SYNC/RAN2/Docs/ [retrieved on 2016-05-22]
- SAMSUNG: "Comparison of index based approaches", 3GPP DRAFT; R2-168086_SYSTEM INFORMATION INDEX_UPDATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, Nevada; 20161114 - 20161118 13 November 2016 (2016-11-13), XP051177782, Retrieved from the Internet: URL:http://www.3gpp.org/ftp/Meetings_3GPP_ SYNC/RAN2/Docs/ [retrieved on 2016-11-13]
- CATT: "NR cell for idle state", 3GPP DRAFT; R2-166125, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Kaohsiung; 20161010 - 20161014 9 October 2016 (2016-10-09), XP051150743, Retrieved from the Internet: URL:http://www.3gpp.org/ftp/Meetings_3GPP_ SYNC/RAN2/Docs/ [retrieved on 2016-10-09]

## Description

### TECHNICAL FIELD

The present invention relates generally to a hypercell controller, a method for system information management, a computer readable storage medium and a computer program product.

### BACKGROUND

In the hypercell concept, a user equipment (UE) is served by a set of transmit-receive points (TRPs) that are coordinated so that the TRPs appear to the UE as a one cell (or a virtual cell, a cloud cell, a no cell, etc.). Although the set of TRPs has the appearance of one cell, the underlying network is made up of individual TRPs and coordination is required to determine which TRP(s) should serve the UE.

"NR PBCH and NR physical channel carried system information" (CATT, vol. RAN WG1, no. Spokane, USA; 20170116 - 20170120, (20170110), 3GPP DRAFT; R1-1700182, 3RD GENERATION PARTNERSHIP PROJECT (3GPP), MOBILE COMPETENCE CENTRE) proposes that NR-PBCH should at least include the general SI, the camping SI (information only needed for camping on a cell), the SI required to access the TRP/beam and to acquire TRP/beam-specific SI, and, if present, reselection SI; and In order to initiate quicker random access, part of RACH parameters can be broadcasted by NR-PBCH; and It is beneficial of broadcasting the related scheduled and/or indication information of other SI via NR-PBCH.

"Control plane for support of NR standalone operation" (CATT, vol. RAN WG2, no. Nanjing, China; 20160523 - 20160527, (20160522), 3GPP DRAFT; R2-163468 CP FOR STANDALONE NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE) proposes that generation of SI at CU or split of SI between CU and DU should be studied for NR.

### SUMMARY

The present invention provides a method for system information management, a hypercell controller, a computer readable storage medium and a computer program product according to the independent claims. Improvements thereof are provided in the dependent claims.

Practice of the foregoing embodiments enables system information (SI) with a local scope (local scope SI) to be provided only to UEs that are affected by the local scope SI. Therefore, network resources are not utilized signaling the local scope SI to UEs that are not impacted, thereby improving communications system efficiency.

### BRIEF DESCRIPTION OF THE DRAWINGS

For a more complete understanding of the present disclosure, and the advantages thereof, reference is now made to the following descriptions taken in conjunction with the accompanying drawings, in which:
Figure 1 illustrates an example wireless communications system according to example embodiments described herein;
Figure 2 illustrates an example communications system highlighting New Radio system design according to example embodiments described herein;
Figure 3 illustrates a diagram highlighting communications exchanged and processing performed by devices participating in the distribution of SI in a hypercell deployment according to example embodiments described herein;
Figure 4 illustrates a diagram highlighting communications exchanged and processing performed by devices participating in the distribution of SI in a hypercell deployment facilitating communications beam barring according to example embodiments described herein;
Figure 5 illustrates a diagram highlighting communications exchanged and processing performed by devices participating in the distribution of updated local SI settings in a hypercell deployment according to example embodiments described herein;
Figure 6 illustrates a diagram highlighting communications exchanged and processing performed by devices participating the updating of local SI and global SI according to example embodiments described herein;
Figure 7 illustrates a diagram highlighting communications exchanged and processing performed by devices participating in an access procedure, where the access procedure includes steps for acquiring the local SI according to example embodiments described herein;
Figure 8 illustrates a flow diagram of example operations occurring in a CU participating in the distribution of local SI according to example embodiments described herein;
Figure 9 illustrates a flow diagram of example operations occurring in a DU participating in the distribution of local SI according to example embodiments described herein;
Figure 10 illustrates a flow diagram of example operations occurring in a UE participating in the distribution of local SI according to example embodiments described herein;
Figure 11 illustrates a block diagram of an embodiment processing system for performing methods described herein; and
Figure 12 illustrates a block diagram of a transceiver adapted to transmit and receive signaling over a telecommunications network according to example embodiments described herein.

### DETAILED DESCRIPTION OF ILLUSTRATIVE EMBODIMENTS

The making and using of the presently example embodiments are discussed in detail below. It should be appreciated, however, that the present disclosure provides many applicable inventive concepts that can be embodied in a wide variety of specific contexts. The specific embodiments discussed are merely illustrative of specific ways to make and use the embodiments, and do not limit the scope of the disclosure.

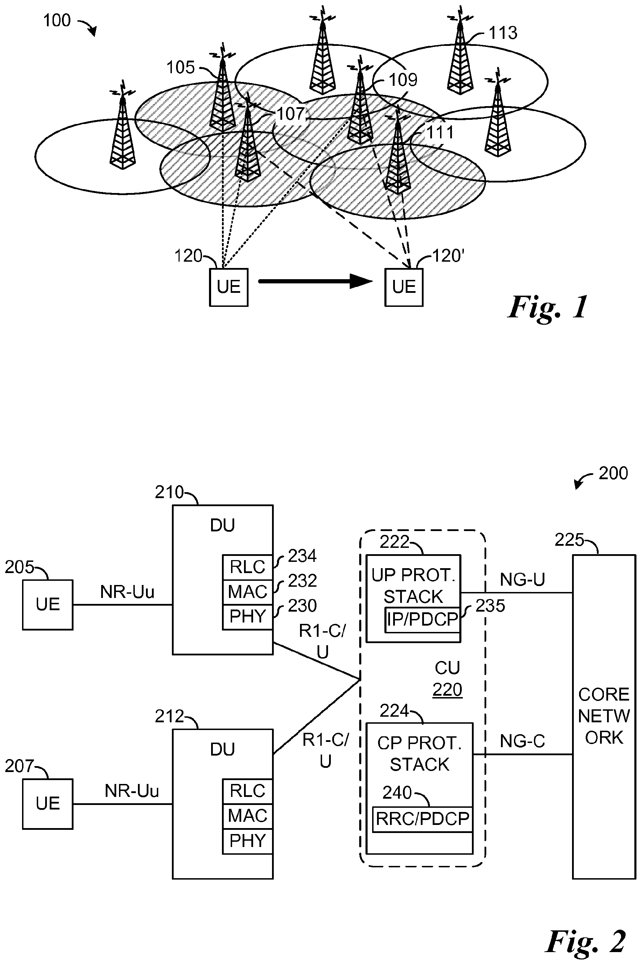

Figure 1 illustrates an example wireless communications system 100. Communications system 100 is a hypercell deployment. Communications system 100 includes a plurality of transmit-receive points (TRPs), including TRP 105, 107, 109, 111, and 113. Each of the TRPs has a coverage area. The TRPs may be base stations, NodeBs, evolved NodeBs (eNBs), gNodeBs (gNBs), master eNBs (MeNBs) or master gNBs (MgNBs), secondary eNBs (SeNBs) or secondary gNBs (SgNBs), access points, low power cells, femto cells, pico cells, small cells, remote radio heads, distributed antennas, and so on. Communications system 100 also includes a user equipment (UE), such as UE 120. The UE may be a mobile station, mobile, station, user, terminal, subscriber, and so on. While it is understood that communications systems may employ multiple TRPs capable of communicating with a number of UEs, only eight TRPs and one UE are illustrated for simplicity.

In a hypercell deployment, a UE is served by a set of TRPs that are coordinated so that the TRPs appear to the UE as one cell. As the UE moves, the TRPs in the set of TRPs may change without knowledge of the UE. As shown in Figure 1, UE 120 is initially served by TRPs 105, 107, and 109. However, as UE 120 moves (now referred to as UE 120' to prevent confusion), the set of TRPs serving UE 120' changes from TRPs 105, 107, and 109 to TRPs 107, 109, and 111. The coordination keeps the changes to the TRPs serving the UE transparent to the UE, at least at the packet data convergence protocol (PDCP) layer and above.

A multi-layered approach is used to coordinate the set of TRPs. Upper protocol layers, such as radio resource control (RRC) and PDCP layers, are anchored at the hypercell level (e.g., a controller controlling the hypercell, such as a centralized unit (CU)), while lower protocol layers, such as radio link control (RLC), media access control (MAC), and physical (PHY) layers, are anchored at the level of individual TRPs or at an intermediate level, such as at a distributed unit (DU) that controls multiple TRPs. It is noted that the lower protocol layers may be anchored at a combination of the individual TRPs and DUs.

The anchoring of the RRC layer at the hypercell level (e.g., the CU) implies that system information (SI) is to be transmitted from the hypercell level (e.g., by the CU). Therefore, it may be easiest to have SI that is common to all TRPs originate from the hypercell level (e.g., the CU) and be provided to the lower layers in the TRPs or the DUs for transmission. Such SI may be provided to the TRPs as one or more already formatted messages of an upper layer protocol, e.g., RRC messages.

In a hypercell deployment, as a UE moves within the hypercell, the UE is free from having to perform a Layer 3 (L₃) handover procedure. Therefore, in terms of RRC layer mobility, the hypercell may be similar to the traditional cell concept although in the hypercell, the lower layers are distributed over many TRPs.

Figure 2 shows an example communications system 200 highlighting New Radio (NR) system design. Communications system 200 is a Fifth Generation (5G) cellular system, following a NR design. Communications system 200 includes a plurality of user equipments (UEs), such as UE 205 and UE 207. Communications system 200 also includes DUs, such as DU 210 and DU 212. Communications system 200 also includes a CU 220, which includes a user plane (UP) protocol stack 222 and a control plane (CP) protocol stack 224. CU 220 is connected to the DUs, as well as core network (CN) 225.

While it is understood that communications systems may employ multiple network entities capable of communicating with a number of UEs, only one CU, two DUs and two UEs are illustrated for simplicity. In addition, it should be understood that the network topology in Figure 2 is exemplary, and particular networks may embody different topologies. For instance, the DUs of a communications system might also be connected directly to the eNBs of an eLTE system, and some 5G cellular systems could operate in a so-called "standalone" mode without interworking with any neighboring eLTE system. Therefore, the communications system shown in Figure 2 should not be construed as being limiting to the scope of the invention as defined by the claims.

As discussed previously, DUs implement a portion of the control plane protocol stack. As shown in Figure 2, the DUs include PHY sublayer, MAC sublayer, and radio link control (RLC) sublayer entities. As an illustrative example, DU 10 includes PHY sublayer entity 230, MAC sublayer entity 232, and RLC sublayer entity 234. The UP functional entities within the CUs (indicated in Figure 2 as "UP") also implement a portion of the user plane protocol stack. As shown in Figure 2, the CUs and the UP entities implement IP/PDCP sublayer entities, such as IP/PDCP sublayer entity 235, while the CUs and the CP protocol stack 224 includes RRC/PDCP sublayer entity 240.

Communications system 200, as shown in Figure 2, illustrates a hierarchical model of the NR design for a 5G cellular system, with one CU managing many DUs (e.g., CU 220 managing DUs 210 and 212). The hierarchical model shown in Figure 2 illustrates a centralized CU and distributed DUs. Although the NR design may be extended to situations with more than one CU, Figure 2 focusses on the portion of an NR radio access network under the management of one CU. In general, a UE is served by one or more DUs, and as a UE moves around, the link between UE and DU is relocated or switched to different DUs. It is noted that Layer 3 control is located at the CU as the anchor point for the RRC protocol layer. As a result, the relocation of the UE's link to a different DU under the control of the same CU does not require a corresponding relocation of the Layer 3 anchor point for the UE.

Layer 2 protocol sublayers are split between the CU and the DU so that a first sublayer of packet processing (the PDCP sublayer) as well as security is located in the CU and the MAC and PHY sublayers are located in the DU. The reliability sublayer (the RLC sublayer) may be located in either the CU or the DU (although shown being located in the DU in Figure 2). In some situations, the locating of the RLC sublayer in the CU, or even dividing RLC functionality between the CU and DU, may be effective. Other layers or sublayers may be present, but are not shown. The Layer 2 sublayers may for convenience be described as layers.

Terminology used herein include:
- TRP: a device capable of transmitting and receiving, also referred to as a remote radio unit (RRU) or transmission-reception point;
- CU: a central entity for control (both CP and UP), and PDCP and/or RRC. Logically, one CU can include multiple cell anchor points (as defined below);
- DU: a distributed entity for remote deployment. One DU can be connected with multiple RRUs or TRPs. MAC/PHY sublayers are located at the DU;
- Physical cell: a sector of a RRU/TRP, or cluster of RRU/TRP. As defined for a traditional cell, the identity of physical cell (PCI) is unique in a limited coverage; and
- Cell anchor point: a Layer 3 management concept for cell at the RRC layer and Si interface. Includes UE tracking at idle state (paging). One cell anchor point can be mapped to multiple physical cells (defined at Layer 2). Globally unique cell ID (e.g., cell global ID (CGI) in ₃GPP LTE) could be at Layer 3.

An example hypercell deployment is as follows:
- The TRPs in the hypercell are assumed to be not visible as protocol entities to the UE.
- Each TRP operates one or more communications beams. The UE is aware of the one or more communications beams, possibly only at lower layers, e.g., the PHY),
   In a situation of low frequency operation without beamforming, the communications beam is omnidirectional, and
   In such a situation, cells, communications beams, and TRPs effectively have the same scope.
- The communications beam may have its own reference signals, such as a beam reference signal (BRS). Furthermore the hypercell is associated with a set of reference signals (such as extended synchronization signals (xSS)),
   It is not assumed that the RRC layer of the UE is aware of the reference signals, and
   However, a UE may use the reference signals as a cross layer optimization to determine when it is in a different communications beam or hypercell.

In a hypercell deployment, SI that is intended for individual cells, TRPs, or communications beams (i.e., SI that is not global in nature) may be difficult to distribute in an efficient manner. As an example, volatile information (such as volatile SI) that changes quickly (thereby requiring immediate updates to affected UEs) is difficult to distribute efficiently. An example of volatile information involves the barring of UEs by individual TRPs where a TRP bars UEs from access. Another example of volatile information includes local measurements of uplink interference that are used for access parameters in Universal Mobile Telecommunications System (UMTS) compliant communications systems. Examples of other information or parameters that may be difficult to distribute efficiently in a hypercell deployment include parameters (e.g., radio parameters that are specific to a cell or TRP) such as:
- Transmit power that is different for different TRPs; a UE measuring signals from a specific TRP would need to know the transmit power of the specific TRP;
- TRPs with varying radio configurations, such as different numbers of antennas;
- Many types of information that are fairly static in nature and can ordinarily be managed at the hypercell level (e.g., the CU), but the information may need to be provided frequently, so that newly arrived UEs at the hypercell can access it, for example.

The CU may provide a list of TRP specific parameters for all TRPs in the hypercell. However, this technique is inefficient and results in the transmission of a lot of parameters in places (coverage areas of TRPs) where they are not needed or do not apply. Therefore, there is a need for cell/TRP/ communications beam specific SI that a UE can maintain, even as the UE moves about the hypercell. The discussion of example embodiments for providing the cell/TRP/ communications beam specific SI in an efficient manner focuses on TRP barring. However, the example embodiments provided herein are applicable to other applications. Therefore, the focus on TRP barring should not be construed as being limiting to the scope of the invention as defined by the claims.

TRP barring typically applies to the TRP as a whole and not an individual communications beam of a TRP. Therefore, if the SI is communications beam specific, then one possible way to bar the TRP is to bar all individual communications beams of the TRP. Such a technique makes it unnecessary to assume that the UE is aware of the level of the TRP.

According to an embodiment, SI in a hypercell includes SI with global scope (referred to herein as global SI) that is applicable to the entire hypercell as well as SI with local scope (referred to herein as local SI). An example of global SI includes barring information, such as access restrictions for load reasons (e.g., probabilistic access class barring in the Third Generation Partnership Project (₃GPP) Long Term Evolution (LTE) technical standards). Local SI is associated with a communications beam and is broadcast by the communications beam with which it is associated. The local SI is applicable only with the communications beam that broadcasts it. The hypercell controller (e.g., the CU) may provide scheduling information to assist UEs in acquiring the local SI. As an example, the hypercell controller transmits resource (e.g., time-frequency resource) information for the local SI of the communications beam.

According to an example embodiment, which is not according to the invention and is present for illustration purposes only, other communications beam specific parameters are broadcast in a similar fashion as the local SI. An example of other communications beam specific parameters is communications beam specific system information blocks (SIBs). Alternatively, one or more SIBs may include specific parameters for the communications beam.

In a hypercell utilizing the CU/DU architecture, global SI is provided by the CU, while local SI is provided by the DU. As an illustrative example, the DU composes a message including the local SI with the message being abstract syntax notation one (ASN.1) encoded. As an alternate example, the DU provides the local SI to the CU and the CU composes a message including the local SI. The CU or the DU can transmit the message.

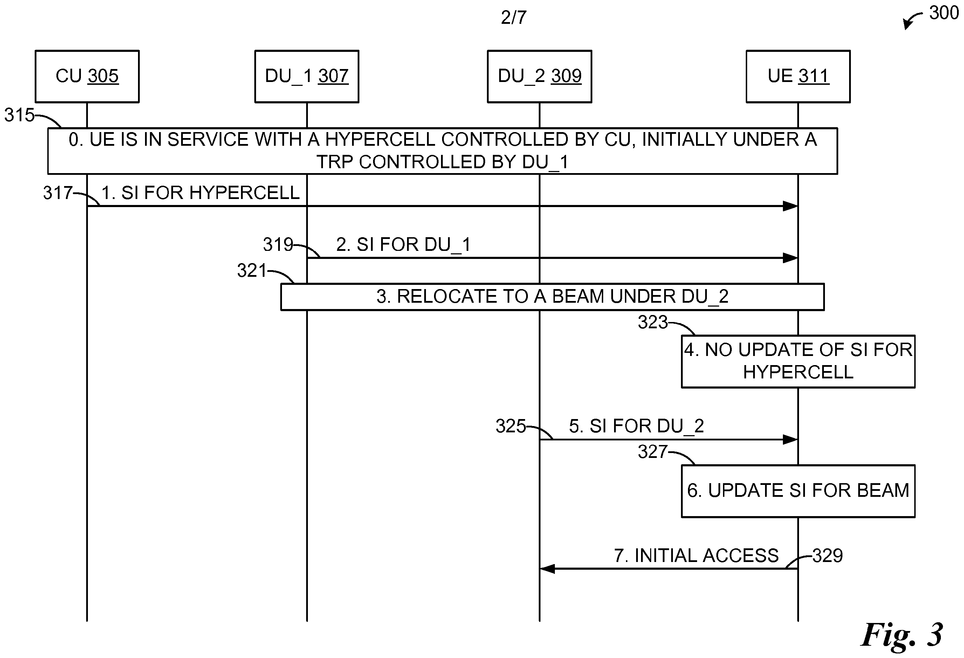

Figure 3 illustrates a diagram 300 highlighting communications exchanged and processing performed by devices participating in the distribution of SI in a hypercell deployment. Diagram 300 displays communications exchanged and processing performed by a CU 305, a first DU (DU_1) 307, a second DU (DU_2) 309, and a UE 311 participating in the distribution of SI in a hypercell deployment.

Initially, UE 311 is located in a hypercell that is controlled by CU 305 and is served by a TRP that is controlled by DU_1307 (block 315). CU 305 transmits global SI that is applicable to the entire hypercell to UE 311 (event 317), while DU_1307 transmits local SI that is applicable to UE 311 to UE 311 (event 319). Although DU_1307 transmits the local SI to UE 311, the message containing the local SI may have been composed by CU 305 and provided to DU_1307. It is noted that the granularity of the local SI may be on a single communications beam basis, meaning that not every UE served by DU_1307 may receive the local SI transmitted to UE 311 in event 319. Only the UEs that are served by the same communications beam as UE 311 may receive the local SI transmitted to UE 311 in event 319. The transmission of the local SI may be broadcast or unicast.

For discussion purposes, consider a situation wherein UE 311 is moving about within the hypercell and leaves the coverage of a communications beam of DU_1307 and relocates to a communications beam of DU_2 309 (block 321). In such a situation, UE 311 may become disconnected from DU_1307 and may need to become connected to DU_2 309. Although UE 311 is under the coverage of DU_2 309, there is no need to receive an update of the global SI from CU 305 (block 323). However, the local SI has potentially changed, meaning that UE 311 must acquire the applicable local SI from DU_2 309. DU_2309 transmits local SI that is applicable to UE 311 to UE 311 (event 325). Although DU_2 309 transmits the local SI to UE 311, the message containing the local SI may have been composed by CU 305 and provided to DU_2 309. UE 311 updates the local SI in accordance with the local SI received from DU_2 309 (block 327). UE 311 initiates an initial access with DU_2 309 (event 329). The initiating of the initial access may make use of both the global SI and the local SI.

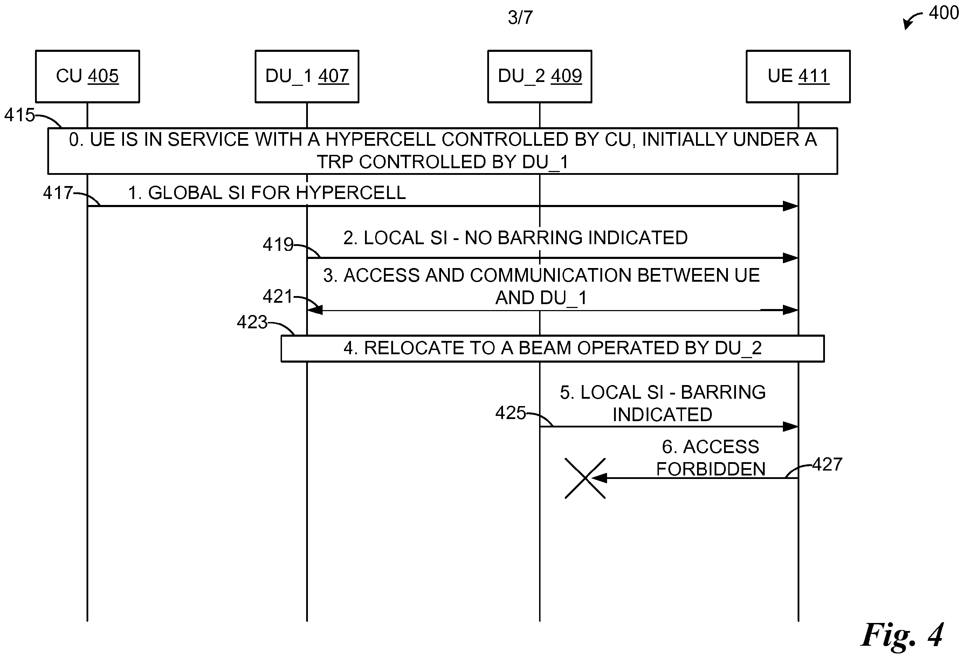

Figure 4 illustrates a diagram 400 highlighting communications exchanged and processing performed by devices participating in the distribution of SI in a hypercell deployment facilitating communications beam barring. Diagram 400 displays communications exchanged and processing performed by a CU 405, a first DU (DU_1) 407, a second DU (DU_2) 409, and a UE 411 participating in the distribution of SI in a hypercell deployment facilitating communications beam barring. Although the discussion focuses on the barring of an individual communications beam, the example embodiments presented herein are applicable to the barring of a plurality of communications beams, a group of communications beams, as well as one or more TRPs. Therefore, the discussion of the barring of a single communications beam should not be construed as being limiting to the scope of the invention as defined by the claims.

Initially, UE 411 is located in a hypercell that is controlled by CU 405 and is served by a TRP that is controlled by DU_1407 (block 415). CU 405 transmits global SI that is applicable to the entire hypercell to UE 411 (event 417), while DU_1407 transmits local SI that is applicable to UE 411 to UE 411 (event 419). The local SI transmitted by DU_1407 includes an indication that there is no barring taking place with the communications beam associated with UE 411. UE 411 and DU_1407 participate in an access procedure and begin communicating (event 421).

Now, consider a situation wherein UE 411 is moving about within the hypercell and leaves the coverage of a communications beam of DU_1407 and relocates to a communications beam of DU_2 409 (block 423). In such a situation, UE 411 may become disconnected from DU-1407 and may need to become connected to DU_2 409. Because the global SI does not change, CU 405 does not need to transmit an update of the global SI. DU_2 409 transmits local SI that is applicable to UE 411 to UE 411 (event 425). For discussion purposes, the communications beam of DU_2409 is barred and the local SI transmitted by DU_2 409 to UE 411 includes an indication that the communications beam has been barred. Because the communications beam has been barred, UE 411 is forbidden to initiate an initial access with DU_2409 using the communications beam (event 427). It is noted that although the communications beam being discussed has been barred, other communications beams of DU_2409 may or may not be barred and UE 411 may still be able to initiate access with an unbarred communications beam of DU_2 409. Furthermore, UE 411 may relocate to a communications beam of another DU, which may not have barred communications beams, and may be able to initiate access with the other DU.

In general, a UE does not need to be aware which SIBs contain (or may contain) local SI. However, in some scenarios it may be advantageous for the UE to be aware of which SIBs may contain local SI, since these SIBs may be considered invalid after a relocation between different communications beams, DUs, or TRPs. The UE also does not need to know where the local SI actually originates (e.g., CU or DU). The UE typically only has to receive the SIBs containing the local SI and update the appropriate local SI whenever there is a need to update the local SI.

As related to the validity of the SIBs, the following are considered:
- If a SIB contains only global SI, a change of communications beam does not invalidate the SIB; and
- If a SIB may contain local SI, a change of communications beam invalidates the SIB and the local SI must be reacquired.
   * However, in the RRC layer (where SIBs are managed), the RRC entity does not necessarily know when a communications beam change occurs. A UE may detect a change in BRS and use the detected change as an indicator that it should update the local SI. It may be required that local SI is valid when certain procedures, e.g., initial access, are initiated. The local SI is valid when certain procedures are initiated may be ensured by: immediately updating the local SI before the procedure commences; a timer based update with a sufficiently short timer is used; a cross layer procedure to trigger the reacquiring of the local SI when the BRS changes; a value tag, sent elsewhere in the SI, with different values in different regions of the hypercell; and so on.

According to an example embodiment, which is not according to the invention and is present for illustration purposes only, the local SI is transmitted with greater frequency than the global SI. The SIBs including the local SI are transmitted with greater frequency than the SIBs including the global SI. In general, the local SI may contain volatile information, therefore, any updates to the local SI should be propagated with as little latency as possible. As an example, SIB₇ in UMTS compliant communications systems contains volatile information for system access. Even if the local SI does not include volatile information, the local SI may still be related to local access, such as communications beam barring. Hence, the UE may be required to update local SI before triggering an access procedure, thereby implying that the frequency of the transmission of the local SI (and the SIBs associated with the local SI) affects the latency of the access.

According to an example embodiment, which is not according to the invention and is present for illustration purposes only, the validity of the local SI is controlled by a short timer or a separate value tag that is indicated elsewhere in the SI. The local SI is not covered by a global value tag or some similar versioning information. The updates of the global value tag or version information would likely increase the latency.

It is noted that many local SI parameters, such as communications beam barring, are rarely set to values that lead to the UE to have to perform a particular required action. As an example, in a situation where a hypercell has no barred communications beams or TRPs under its control, the UE can avoid wasting time by not checking for barring information of each communications beam that it enters. Hence, an indication that indicates if a UE has to or does not have to perform a particular required action can help to reduce wasted overhead by preventing the UE from unnecessarily perform the required action. According to an embodiment, the hypercell transmits an indication of the presence or absence of local SI associated with TRPs or communications beams in the hypercell. The hypercell (e.g., CU) may transmit a global indication of no local SI (e.g., no barred communications beams or TRPs) in this hypercell. A UE, after receiving the global indication of no local SI, will be able to skip checking for local SI of communications beams or TRPs that are associated with the hypercell, thereby reducing overall latency.

Some service types, such as ultra-reliable low latency communications (URLLC), have such tight latency requirements that the UEs cannot ever check for local SI because the checking for local SI may result in violation of the latency requirements. These service types may require that the hypercell provides complete SI and updates as a change occurs. As an example, the hypercell provides a list of all barred communications beams and when barring is turned on or off by a particular communications beam, the hypercell updates the list and provides the list (or just the changed communications beam) to the UEs. In order to facilitate acquiring the changed system information by the UEs, the hypercell may change versioning information associated with its system information broadcast, such as by advancing a value tag, for example. In general, the solution for these particular service types is not usable for general use because there is too much disruption for other UEs (those that are not utilizing the particular service types). Therefore, the solution should be limited to the particular service types, e.g., specific radio access network (RAN) slices or specific UEs that may be updated using dedicated transmissions of the changed SI.

According to an embodiment, the DUs originate the update to the local SI. The DU sets the local SI, such as the communications beam barring parameter(s), rather than providing an interface (e.g., a network management object) to the CU and having the CU setting the local SI for the DU. However, the DU does not have to originate an RRC message with a SIB containing the updated local SI. Instead, the DU propagates the updated local SI to the CU. The CU may then serve as the point of origin for the RRC message to be delivered to the UE.

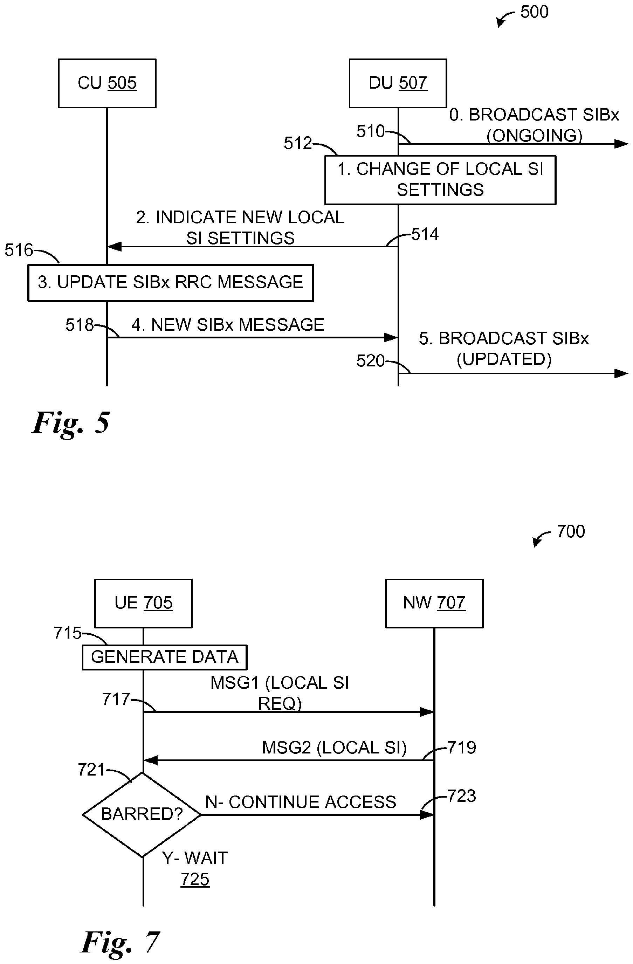

Figure 5 illustrates a diagram 500 highlighting communications exchanged and processing performed by devices participating in the distribution of updated local SI settings in a hypercell deployment. Diagram 500 displays communications exchanged and processing performed by a CU 505, and a DU (DU_1)507 participating in the distribution of updated local SI in a hypercell deployment.

Initially, DU 507 broadcasts or transmits a SIB with local SI (event 510). The SIB may be transmitted in one or more communications beams associated with the information in the local SI. The SIB may have been composed by CU 505 and provided to DU 507. The SIB may be broadcasted or transmitted in a periodic manner, as specified by CU 505, a technical standard, an operator operating the hypercell, and so on. DU 507 makes a change to one or more local SI settings (block 512). Examples of the local SI settings may include radio parameters specific to DU 507 or TRP(s) associated with DU 507, such as resource block occupancy, observed uplink interference level, and so on. DU 507 transmits an indication of the changes to the one or more local SI settings to CU 505 (event 514). CU 505 updates the SIB with the changed one or more local SI settings, generating a new RRC message (block 516). CU 505 provides the new RRC message including the updated SIB with the changed one or more local SI settings to DU 507 (event 518). DU 507 broadcasts or transmits the update SIB (event 520). The updated SIB may be broadcasted or transmitted in the same manner as in event 510.

According to an embodiment, the hypercell (e.g., the CU) maintains a global local SI indicator (GLSII) that indicates if local SI is present for at least one communications beam or TRP, or absent for all communications beams or TRPs, within the hypercell. The GLSII 2. is be included in global SI that is transmitted by the CU in SIBs containing global SI. As an example, if the GLSII is set to a first value (e.g., TRUE) then there is at least one communications beam or TRP in the hypercell with local SI and the UE has to check for local SI, while if the GLSII is set to a second value (e.g., FALSE) then there are no communications beams or TRPs in the hypercell with local SI and the UE does not have to check for local SI. If the condition (presence or absence of local SI) changes, the hypercell may update the GLSII. As an illustrative example, if the GLSII is currently set to the second value (e.g., FALSE), then there is no need for a UE to check for local SI. However, if a change occurs and it becomes necessary for at least one communications beam or TRP to utilize local SI, a DU associated with the at least one communications beam or TRP updates the CU (in a manner similar to the way shown in Figure 5 and discussed herein, for example) and the CU changes the GLSII to the first value (e.g., TRUE), thereby indicating to UEs to check for local SI. A reverse situation where the presence of local SI becomes an absence of local SI is also possible.

As an illustrative example, consider a situation wherein communications beam barring is initially not used, but subsequently, it becomes necessary to bar at least one communications beam or TRP. The CU (after being notified by a DU associated with the at least one communications beam or TRP) updates the GLSII, which is transmitted in SIBs containing global SI. With the updated GLSII indicating that communications beam barring is being used, UEs will additionally be triggered to check for updates to the local SI for each communications beam, as well as the global SI. In general, each communications beam transmits its own local SI in a SIB. Whether or not a UE will check for the presence of the local SI whenever a change in communications beam occurs is dependent upon the GLSII.

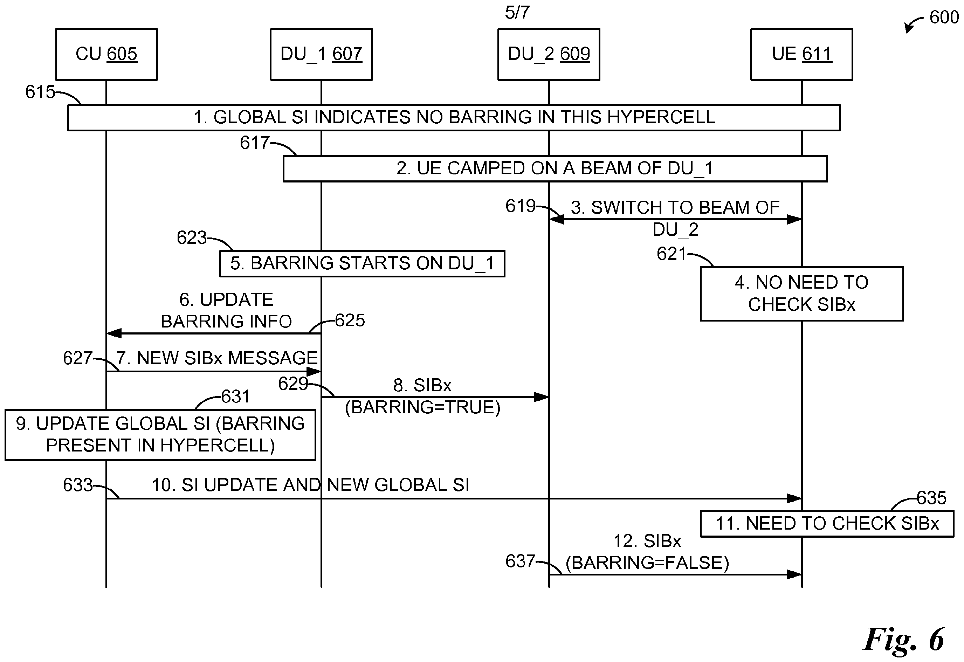

Figure 6 illustrates a diagram 600 highlighting communications exchanged and processing performed by devices participating the updating of local SI and global SI. Diagram 600 displays communications exchanged and processing performed by a CU 605, a first DU (DU_1)607, a second DU (DU_2) 609, and a UE 611 participating in the updating of local SI and global SI. The discussion of Figure 6 focuses on a situation where the hypercell changes from no communications beam barring to communications beam barring, however, the example embodiments presented herein are operable with other types of local SI. Furthermore, the example embodiments presented herein are operable with the transition from a UE having to check for local SI to the UE not having to check for local SI.

Initially, CU 605 transmits a GLSII set to a value (e.g., FALSE) indicating that there is no communications beam barring in the hypercell and the UE do not have to check for local SI (block 615). Furthermore, UE 611 is camped on a communications beam of DU_1 607 (block 617). However, due to mobility, UE 611 switches to a communications beam of DU_2 609 (event 619). Due to the GLSII indicating that UEs do not have to check for local SI, UE 611 does not check for a SIB containing local SI transmitted by DU_2 609 even after the change in communications beam (block 621).

DU_1 607 begins communications beam barring (block 623) and provides updated local SI including the communications beam barring information to CU 605 (event 625). CU 605 composes a new SIB message including the updated local SI and provides the new SIB message to DU_1 607 (event 627). DU_1 607 begins to transmit the SIB message with the updated local SI information, including communications beam barring information (event 629). CU 605 changes the GLSII value (e.g., TRUE) to indicate that there is communications beam barring in the hypercell and that UEs do have to check for local SI (block 631). CU 605 transmits the GLSII along with updated global SI (event 633). UE 611 receives the GLSII and checks for a SIB including local SI (block 635). However, DU_2 609 is not participating in communications beam barring and transmits a SIB with local SI indicating that communications beam barring is not being performed (event 637). UE 611 receives the local SIB, determines that communications beam barring is not being performed, and continues operating accordingly. At a DU that is not participating in communications beam barring, such as DU_2 609, the local SIB may include an indicator indicating that there is no local SI or that communications beam barring is OFF, for example. In other words, at a DU that is not utilizing local SI, the local SIB would contain an indicator that there is no local SI. If UE 611 had been served by DU_1607, UE 611 would have acquired the local SIB, determined that communications beam barring was being performed, and applied the barring, e.g., considered itself not permitted to perform an access procedure.

In some situations, the acquisition of communications beam specific parameters may be time critical. As an example, in a situation where communications beam barring is implemented, it is mandatory to have a current version of the local SI prior to accessing a TRP. Therefore, local SI needs to be made available prior to UE access. In a solution utilizing the broadcast of local SI, the broadcast of the local SI may be scheduled prior to access opportunities. In a dedicated solution, the UE may request the local SI before or during an access opportunity.

Figure 7 illustrates a diagram 700 highlighting communications exchanged and processing performed by devices participating in an access procedure, which is not covered by the claims, where the access procedure includes steps for acquiring the local SI. Diagram 700 displays communications exchanged and processing performed by a UE 705 and a network entity (NW) 707 participating in an access procedure.

UE 705 generates data and has to obtain access to transmit the data (block 715). UE 705 initiates a random access procedure by transmitting a first message to NW 707 (event 717). The first message includes a request for local SI from NW 707. NW 707 may be a TRP controlled by a DU. NW 707 responds with a second message (event 719). The second message includes the local SI requested by UE 705. UE 705 performs a check to determine if a communications beam of NW 707 has been barred (block 721). In other words, UE 705 checks the local SI provided in the second message to determine if a communications beam that UE 705 will use to communicate with NW 707 has been barred. If the communications beam has not been barred, UE 705 continues with the random access procedure (event 723). If the communications beam has been barred, UE 705 waits (event 725). Waiting allows UE 705 to potentially move to another communications beam or network device that has not been barred. Alternatively, the communications beam that is currently barred may become unbarred after a period of time.

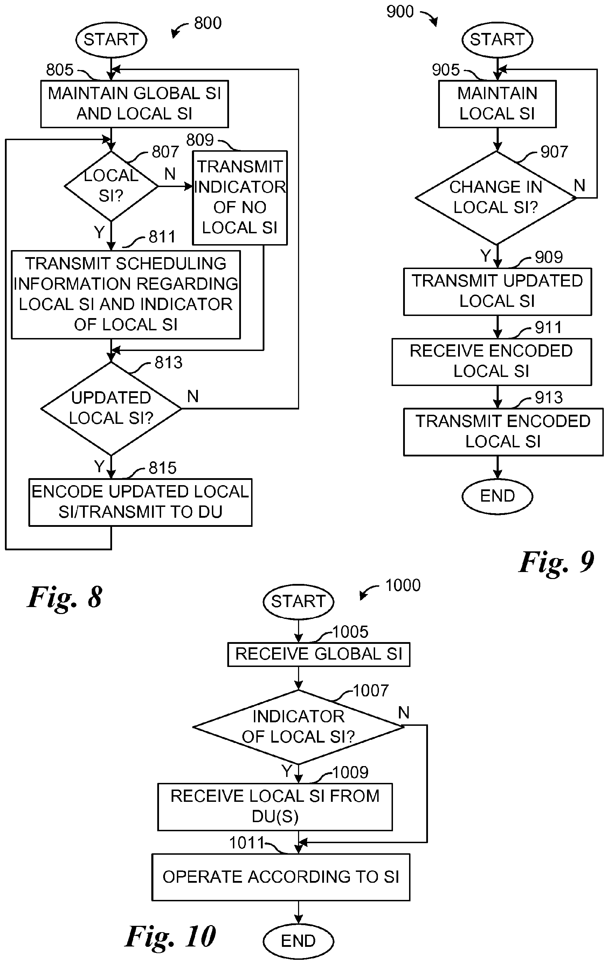

Figure 8 illustrates a flow diagram of example operations 800 occurring in a CU participating in the distribution of local SI. Operations 800 may be indicative of operations occurring in a CU as the CU participates in the distribution of local SI.

Operations 800 begin with the CU maintaining global SI and local SI (block 805). The global SI and the local SI may be maintained in a memory of the CU, or a local or remote database accessible by the CU. The CU performs a check to determine if local SI is being used by a DU that controlled by the CU (block 807). If the local SI is not being used by a DU that is controlled by the CU, the CU leaves a GLSII set to a value to indicate that local SI is not being used and transmits the GLSII (block 809). If the local SI is being used by one or more DUs that is controlled by the CU, the CU sets the GLSII to a value to indicate that local SI is being used and transmits scheduling information regarding the transmission of the local SI by the one or more DUs, as well as the GLSII (block 811).

The CU performs a check to determine if it has received an update to local SI from one or more DU that is controlled by the CU (block 813). If the CU has not received an update to local SI, the CU returns to block 805 to continue maintaining the global SI and the local SI. If the CU has received an update to local SI, the CU encodes the updated local SI and transmits the encoded local SI to the DU that transmitted the local SI update (block 815) and returns to block 805 to continue maintaining the global SI and the local SI.

Figure 9 illustrates a flow diagram of example operations 900, which are not covered by the claims, occurring in a DU participating in the distribution of local SI. Operations 900 may be indicative of operations occurring in a DU as the DU participates in the distribution of local SI.

Operations 900 begin with the DU maintaining local SI (block 905). Depending on the nature of the local SI, the DU may maintain multiple instances of the local SI. As an example, in the communications beam barring case, the DU may maintain an instance of the local SI for each communications beam that is barred. The DU performs a check to determine if the local SI has been changed (block 907). If the local SI has not been changed, the DU returns to block 905 to maintain the local SI. If the local SI has been changed, the DU transmits the updated local SI to the CU (block 909). The DU receives an encoded version of the local SI from the CU (block 911). The DU transmits the encoded local SI (block 913). The transmission of the encoded local SI may be in accordance with scheduling information related to a transmission opportunity scheduled by the CU to allow the DU to transmit the encoded local SI and to assist UEs in receiving the encoded local SI.

Figure 10 illustrates a flow diagram of example operations 1000, which are not covered by the claims, occurring in a UE participating in the distribution of local SI. Operations 1000 may be indicative of operations occurring in a UE as the UE participates in the distribution of local SI.

Operations 1000 begin with the UE receiving global SI (block 1005). The UE processes the global SI to determine the value of the GLSII. The UE performs a check to determine if local SI is present (block 1007). The UE may check the value of the GLSII to determine if local SI is present, for example. If local SI is present, the UE receives the local SI from DU(s) (block 1009). The UE may utilize scheduling information provided by the CU to help the UE receive the local SI. The UE operates in accordance with the SI (block 1011). The UE operates utilizing the global SI and the local SI.

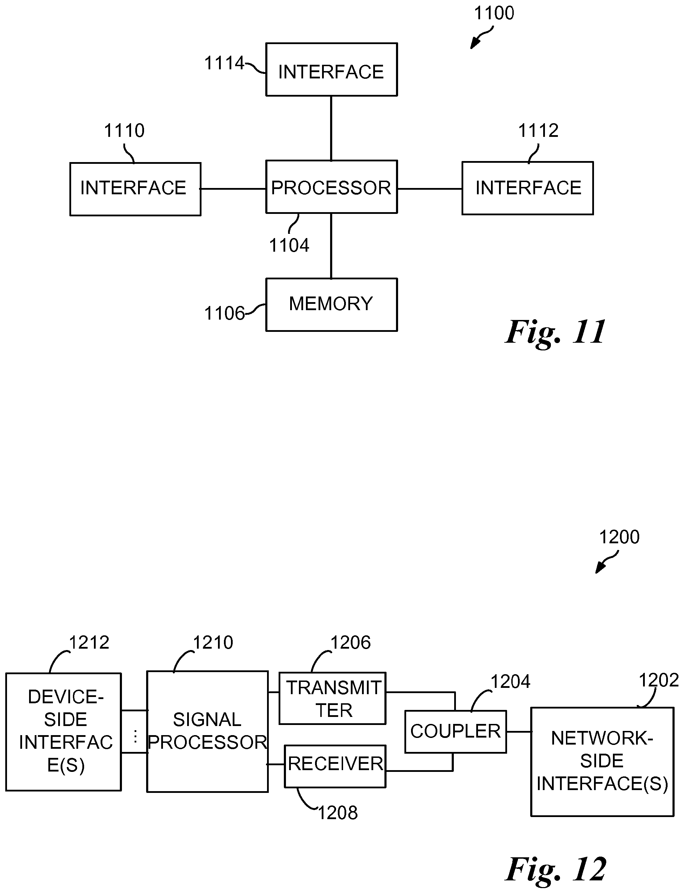

Figure 11 illustrates a block diagram of an embodiment processing system 1100 for performing methods described herein, which may be installed in a host device. As shown, the processing system 1100 includes a processor 1104, a memory 1106, and interfaces 1110-1114, which may (or may not) be arranged as shown in Figure 11. The processor 1104 may be any component or collection of components adapted to perform computations and/or other processing related tasks, and the memory 1106 may be any component or collection of components adapted to store programming and/or instructions for execution by the processor 1104. In an embodiment, the memory 1106 includes a non-transitory computer readable medium. The interfaces 1110, 1112, 1114 may be any component or collection of components that allow the processing system 1100 to communicate with other devices/components and/or a user. For example, one or more of the interfaces 1110, 1112, 1114 may be adapted to communicate data, control, or management messages from the processor 1104 to applications installed on the host device and/or a remote device. As another example, one or more of the interfaces 1110, 1112, 1114 may be adapted to allow a user or user device (e.g., personal computer (PC), etc.) to interact/communicate with the processing system 1100. The processing system 1100 may include additional components not depicted in Figure 11, such as long term storage (e.g., non-volatile memory, etc.).

In some embodiments, the processing system 1100 is included in a network device that is accessing, or part otherwise of, a telecommunications network. In one example, the processing system 1100 is in a network-side device in a wireless or wireline telecommunications network, such as a base station, a relay station, a scheduler, a controller, a gateway, a router, an applications server, or any other device in the telecommunications network. In other embodiments, which are not covered by the claims, the processing system 1100 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

In some embodiments, one or more of the interfaces 1110, 1112, 1114 connects the processing system 1100 to a transceiver adapted to transmit and receive signaling over the telecommunications network. Figure 12 illustrates a block diagram of a transceiver 1200 , which is not covered by the claims, adapted to transmit and receive signaling over a telecommunications network. The transceiver 1200 may be installed in a host device. As shown, the transceiver 1200 comprises a network-side interface 1202, a coupler 1204, a transmitter 1206, a receiver 1208, a signal processor 1210, and a device-side interface 1212. The network-side interface 1202 may include any component or collection of components adapted to transmit or receive signaling over a wireless or wireline telecommunications network. The coupler 1204 may include any component or collection of components adapted to facilitate bi-directional communication over the network-side interface 1202. The transmitter 1206 may include any component or collection of components (e.g., up-converter, power amplifier, etc.) adapted to convert a baseband signal into a modulated carrier signal suitable for transmission over the network-side interface 1202. The receiver 1208 may include any component or collection of components (e.g., down-converter, low noise amplifier, etc.) adapted to convert a carrier signal received over the network-side interface 1202 into a baseband signal. The signal processor 1210 may include any component or collection of components adapted to convert a baseband signal into a data signal suitable for communication over the device-side interface(s) 1212, or vice-versa. The device-side interface(s) 1212 may include any component or collection of components adapted to communicate data-signals between the signal processor 1210 and components within the host device (e.g., the processing system 1100, local area network (LAN) ports, etc.).

The transceiver 1200 may transmit and receive signaling over any type of communications medium. In some embodiments, the transceiver 1200 transmits and receives signaling over a wireless medium. For example, the transceiver 1200 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such embodiments, the network-side interface 1202 comprises one or more antenna/radiating elements. For example, the network-side interface 1202 may include a single antenna, multiple separate antennas, or a multi-antenna array configured for multi-layer communication, e.g., single input multiple output (SIMO), multiple input single output (MISO), multiple input multiple output (MIMO), etc. In other embodiments, the transceiver 1200 transmits and receives signaling over a wireline medium, e.g., twisted-pair cable, coaxial cable, optical fiber, etc. Specific processing systems and/or transceivers may utilize all of the components shown, or only a subset of the components, and levels of integration may vary from device to device.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by a maintaining unit/module, a generating unit/module, a broadcasting unit/module, a scheduling unit/module, an encoding unit/module, a searching unit/module, and/or an updating unit/module. The respective units/modules may be hardware, software, or a combination thereof. For instance, one or more of the units/modules may be an integrated circuit, such as field programmable gate arrays (FPGAs) or application-specific integrated circuits (ASICs).

## Claims

1. A method for system information, SI, management, the method comprising:
maintaining (805), by a hypercell controller, global SI applicable to an entirety of a hypercell controlled by the hypercell controller and local SI associated with at least one distributed controller of the hypercell;
generating, by the hypercell controller, a global local SI indicator, GLSII, indicating usage of the local SI in the hypercell; and
broadcasting, by the hypercell controller, the global SI including the GLSII,
the method being **characterized in that**:
the method further comprises:
receiving, by the hypercell controller, updated local SI from the at least one distributed controller of the hypercell;
encoding (815), by the hypercell controller, the updated local SI, wherein encoding the updated local SI comprises generating a radio resource control, RRC, message including the updated local SI; and
transmitting, by the hypercell controller, the encoded local SI to the at least one distributed controller of the hypercell, from which it has received the updated local SI.

2. The method of claim 1, wherein the local SI is used in the hypercell, and wherein the method further comprises:
scheduling, by the hypercell controller, a transmission opportunity for the at least one distributed controller to transmit the local SI; and
transmitting (811), by the hypercell controller, scheduling information about the transmission opportunity to the at least one distributed controller.

3. The method of claim 1, further comprising updating, by the hypercell controller, the global SI in accordance with the updated local SI.

4. The method of claim 3, wherein updating the global SI comprises:
updating the GLSII; and
broadcasting the updated GLSII.

5. The method of claim 1, wherein the GLSII is a two-valued indicator, with a first value indicating that the local SI is used by the at least one distributed controller and a second value indicating that the local SI is not used the at least one distributed controller.

6. A hypercell controller adapted to manage system information, SI, the hypercell controller comprising:
a processor (1104)
a memory (1106) and
interfaces (1110, 1112, 1114)
wherein the memory is adapted to store instructions which, when executed by the processor, cause the hypercell controller to perform the steps of the method according to any of claims 1 to 5.

7. A computer readable storage medium, comprising instructions which, when executed by a processor of a hypercell controller , cause the hypercell controller to perform the method according to any of claims 1 to 5.

8. A computer program product comprising instructions which, when executed by a processor of a hypercell controller cause the hypercell controller to perform the steps of the method according to any of claims 1 to 5.

## Patentansprüche

1. Verfahren zur Verwaltung von Systeminformationen (SI), wobei das Verfahren Folgendes umfasst:
Pflegen (805), durch eine Hyperzellensteuerung, von globalen SI, die auf eine Gesamtheit einer Hyperzelle zutreffen, die durch die Hyperzellensteuerung gesteuert wird, und von lokalen SI, die mindestens einer dezentralen Steuerung der Hyperzelle zugeordnet sind;
Generieren, durch die Hyperzellensteuerung, einer globalen Angabe der lokalen SI (GLSII), welche die Verwendung der lokalen SI in der Hyperzelle angibt; und
Senden, durch die Hyperzellensteuerung, der globalen SI einschließlich der GLSII,
wobei das Verfahren **dadurch gekennzeichnet ist,**
**dass** es ferner Folgendes umfasst:
Empfangen, durch die Hyperzellensteuerung, von aktualisierten lokalen SI von der mindestens einen dezentralen Steuerung der Hyperzelle;
Kodieren (815), durch die Hyperzellensteuerung, der aktualisierten SI, wobei das Kodieren der aktualisierten SI das Generieren einer Funkressourcensteuerungs-Nachricht (RRC-Nachricht) umfasst, welche die aktualisierten lokalen SI beinhaltet; und
Übertragen, durch die Hyperzellensteuerung, der kodierten lokalen SI an die mindestens eine dezentrale Steuerung der Hyperzelle, von welcher sie die aktualisierten lokalen SI empfangen hat.

2. Verfahren nach Anspruch 1, wobei die lokalen SI in der Hyperzelle verwendet werden und wobei das Verfahren ferner Folgendes umfasst:
Planen, durch die Hyperzellensteuerung, einer Übertragungsmöglichkeit für die mindestens eine dezentrale Steuerung, um die lokalen SI zu übertragen; und
Übertragen (811), durch die Hyperzellensteuerung, von Planungsinformationen über die Übertragungsmöglichkeit an die mindestens eine dezentrale Steuerung.

3. Verfahren nach Anspruch 1, das ferner das Aktualisieren der globalen SI gemäß den aktualisierten lokalen SI durch die Hyperzellensteuerung umfasst.

4. Verfahren nach Anspruch 3, wobei das Aktualisieren der globalen SI Folgendes umfasst:
Aktualisieren der GLSII; und
Senden der aktualisierten GLSII.

5. Verfahren nach Anspruch 1, wobei die GLSII eine Angabe mit zwei Werten ist, wobei ein erster Wert angibt, dass die lokalen SI durch die mindestens eine dezentrale Steuerung verwendet werden, und ein zweiter Wert angibt, das die lokalen SI nicht durch die mindestens eine dezentrale Steuerung verwendet werden.

6. Hyperzellensteuerung, die dazu angepasst ist, Systeminformationen (SI) zu verwalten, wobei die Hyperzellensteuerung Folgendes umfasst:
einen Prozessor (1104);
einen Speicher (1106) und
Schnittstellen (1110, 1112, 1114);
wobei der Speicher dazu angepasst ist, Anweisungen zu speichern, die bei Ausführung durch den Prozessor die Hyperzellensteuerung dazu veranlassen, die Schritte des Verfahrens nach einem der Ansprüche 1 bis 5 durchzuführen.

7. Computerlesbares Speichermedium, das Anweisungen umfasst, die bei Ausführung durch einen Prozessor einer Hyperzellensteuerung die Hyperzellensteuerung dazu veranlassen, das Verfahren nach einem der Ansprüche 1 bis 5 durchzuführen,

8. Computerprogrammprodukt, das Anweisungen umfasst, die bei Ausführung durch einen Prozessor einer Hyperzellensteuerung die Hyperzellensteuerung dazu veranlassen, das Verfahren nach einem der Ansprüche 1 bis 5 durchzuführen.

## Revendications

1. Procédé de gestion d'informations système, SI, le procédé comprenant :
la conservation (805), par un dispositif de commande d'hypercellule, de SI globales applicables à un ensemble d'une hypercellule commandée par le dispositif de commande d'hypercellule et de SI locales associées à au moins un dispositif de commande distribué de l'hypercellule ;
la génération, par le dispositif de commande d'hypercellule, d'un indicateur de SI locales global, GLSII, indiquant l'utilisation des SI locales dans l'hypercellule ; et
la diffusion, par le dispositif de commande d'hypercellule, des SI globales incluant le GLSII,
le procédé étant **caractérisé en ce que** :
le procédé comprend en outre :
la réception, par le dispositif de commande d'hypercellule, de SI locales mises à jour depuis l'au moins un dispositif de commande distribué de l'hypercellule ;
le codage (815), par le dispositif de commande d'hypercellule, des SI locales mises à jour, dans lequel le codage des SI locales mises à jour comprend la génération d'un message de commande de ressources radio, RRC, comportant les SI locales mises à jour ; et
la transmission, par le dispositif de commande d'hypercellule, des SI locales codées vers l'au moins un dispositif de commande distribué de l'hypercellule, à partir duquel il a reçu les SI locales mises à jour.

2. Procédé selon la revendication 1, dans lequel les SI locales sont utilisées dans l'hypercellule, et dans lequel le procédé comprend en outre :
la planification, par le dispositif de commande d'hypercellule, d'une opportunité de transmission pour que l'au moins un dispositif de commande distribué transmette les SI locales ; et
la transmission (811), par le dispositif de commande d'hypercellule, d'informations de planification sur l'opportunité de transmission vers l'au moins un dispositif de commande distribué.

3. Procédé selon la revendication 1, comprenant en outre la mise à jour, par le dispositif de commande d'hypercellule, des SI globales conformément aux SI locales mises à jour.

4. Procédé selon la revendication 3, dans lequel la mise à jour des SI globales comprend :
la mise à jour du GLSII ; et
la diffusion du GLSII mis à jour.

5. Procédé selon la revendication 1, dans lequel le GLSII est un indicateur à deux valeurs, avec une première valeur indiquant que les SI locales sont utilisées par l'au moins un dispositif de commande distribué et une seconde valeur indiquant que les SI locales ne sont pas utilisées par l'au moins un dispositif de commande distribué.

6. Dispositif de commande d'hypercellule conçu pour gérer des informations système, SI, le dispositif de commande d'hypercellule comprenant :
un processeur (1104)
une mémoire (1106) et
des interfaces (1110, 1112, 1114)
dans lequel la mémoire est adaptée pour stocker des instructions qui, lorsqu'elles sont exécutées par le processeur, amènent le dispositif de commande d'hypercellule à mettre en œuvre les étapes du procédé selon l'une quelconque des revendications 1 à 5.

7. Support de stockage lisible par ordinateur, comprenant des instructions qui, lorsqu'elles sont exécutées par un processeur d'un dispositif de commande d'hypercellule, amènent le dispositif de commande d'hypercellule à mettre en œuvre le procédé selon l'une quelconque des revendications 1 à 5.

8. Produit de programme informatique comprenant des instructions qui, lorsqu'elles sont exécutées par un processeur d'un dispositif de commande d'hypercellule, amènent le dispositif de commande d'hypercellule à mettre en œuvre les étapes du procédé selon l'une quelconque des revendications 1 à 5.
